# EUROPEAN PATENT APPLICATION

(11) **EP 2 066 053 A2**
(43) Date of publication of application: **03.06.2009**
(21) Application number: 08020302.9
(22) Date of filing: 21.11.2008
(51) Int. Cl.: H04H 60/15

(54) **Method for controlling broadcast reception in a mobile terminal using a removable identity device and mobile terminal for implementing the method**

(30) Priority: 30.11.2007 KR 20070123226
(71) Applicant: LG Electronics Inc., Seoul 150-010 (KR)
(72) Inventor: Lee, Sang Hoon, Kumchon-gu Seoul,153-801 (KR); Jung, Gu Wan, Kumchon-gu Seoul,153-801 (KR); Kim, Yun Sik, Kumchon-gu Seoul,153-801 (KR)
(74) Representative: Katérle, Axel

(57) **Abstract**

A terminal is provided. The terminal includes a removable identity device attached to the terminal, a wireless communication unit for receiving broadcast information, an output unit for displaying the broadcast information received by the wireless communication unit, a controller for identifying a broadcast provider using the identity device and controlling the wireless communication unit to receive the broadcast information corresponding to the identified broadcast provider.

## Description

### CROSS-REFERENCE TO RELATED APPLICATIONS

This application claims the benefit of the Korean Patent Application No. 10-2007-0123226, filed on November 30, 2007, which is hereby incorporated by reference as if fully set forth herein.

### BACKGROUND OF THE INVENTION

### Field of the Invention

The present invention relates to a terminal, and more particularly, to a method for controlling broadcasts received by a terminal.

### Discussion of the Related Art

A terminal may be configured to perform various functions, such as data and voice communications, capturing images and video via a camera, recording audio, playing music files, and displaying images and video. Some terminals include additional functionality which supports game playing, while other terminals are configured as multimedia players. More recently, terminals have been configured to receive broadcast and multicast signals which permit viewing of content such as videos and television programs.

According to the related art, a terminal may receive a broadcast signal provided by a broadcast provider which is hard-coded in the terminal. In a related art mobile terminal, a user must select a broadcast provider amongst a plurality of broadcast providers in order to receive a broadcast signal provided by the selected broadcast provider.

However, since the related art terminal has a hard-coded broadcast provider, there is no method for the user to select a specific broadcast provider. Moreover, according to the related art, even if a plurality of broadcast providers are provided, it is inconvenient for a user to individually select a specific broadcast provider.

### SUMMARY OF THE INVENTION

Features and advantages of the invention will be set forth in the description which follows, and in part will be apparent from the description, or may be learned by practice of the invention. The objectives and other advantages of the invention will be realized and attained by the structure particularly pointed out in the written description and claims hereof as well as the appended drawings.

In accordance with an embodiment a terminal is provided. The terminal includes a replaceable identity device attached to the terminal, a wireless communication unit for receiving broadcast information, an output unit for displaying the broadcast information received by the wireless communication unit, and a controller for identifying a broadcast provider using the identity device and controlling the wireless communication unit to receive the broadcast information corresponding to the identified broadcast provider.

According to one feature, the wireless communication unit receives data including identification information and a password for at least one broadcast provider and wherein the controller identifies the broadcast provider by matching the broadcast provider password with the identity device password using the received data. Additionally, the controller identifies each of the at least one broadcast provider using the received data if the broadcast provider password does not match the identity device password. Furthermore, the wireless communication unit receives the broadcast information for a shared channel provided by the at least one broadcast provider under control of the controller.

According to another feature, the wireless communication unit receives the broadcast information for a channel provided by the broadcast provider and a shared channel provided by a different broadcast provider under control of the controller.

According to yet another feature, the wireless communication unit receives data including identification information for each of at least one broadcast information provider and the at least one broadcast information provider is interconnected to the at least one broadcast provider.

According to still yet another feature, the controller recognizes an identifier of the broadcast provider and uses the recognized identifier to determine information required to receive the broadcast information and the wireless communication unit receives the broadcast information using the required information.

According to another feature, the terminal further includes a memory for storing the broadcast information, wherein the controller compares the received broadcast information to the stored broadcast information and updates the stored broadcast information with the received broadcast information if the received broadcast information is different from the stored broadcast information. Additionally, the controller compares the received broadcast information with the stored broadcast information using at least version information of the broadcast information or identification information of the broadcast information. The terminal may further include a user input unit for receiving a channel selection using the displayed broadcast information, wherein the output unit outputs a broadcast signal provided by the selected channel under control of the controller. Finally, the identity device comprises a subscriber identity module (SIM) card, a universal subscriber identity module (USIM) card, or a removable subscriber identity module (RSIM) card.

In accordance with another embodiment a terminal is provided. The terminal includes a removable identity device attached to the terminal, an output unit for displaying a list including one or more broadcast providers, a user input unit for receiving a selection of the one or more broadcast providers from the displayed list, a wireless communication unit for receiving broadcast information, and a controller for determining whether an identity password set in the identity device matches a broadcast password set for the selected broadcast provider.

In accordance with yet another embodiment, a method of controlling a broadcast in a terminal is provided. The method includes identifying a broadcast provider using a replaceable identity device attached to the terminal, receiving broadcast information related to the identified broadcast provider, and displaying the received broadcast information.

In accordance with still yet another embodiment, a method of controlling a broadcast in a terminal is provided. The method includes displaying a list including at least one broadcast provider, selecting a broadcast provider from the displayed list, determining whether an identity device password set in an identity device attached to the terminal matches a broadcast provider password set for the selected broadcast provider, receiving broadcast information for a channel provided by the selected broadcast provider if the identity device password matches the broadcast provider password, and displaying the received broadcast information.

These and other embodiments will also become readily apparent to those skilled in the art from the following detailed description of the embodiments having reference to the attached figures, the invention not being limited to any particular embodiment disclosed.

### BRIEF DESCRIPTION OF THE DRAWINGS

The above and other aspects, features, and advantages of the present invention will become more apparent upon consideration of the following description of preferred embodiments, taken in conjunction with the accompanying drawing figures, wherein:

FIG. 1 is a block diagram of a terminal in accordance with an embodiment of the present invention.

FIG. 2A is a perspective view of a front side of a terminal according to an embodiment of the present invention.

FIG. 2B is a rear view of the terminal shown in FIG. 2A.

FIG. 3A and FIG. 3B are perspective diagrams of a terminal according to one embodiment of the present invention.

FIG. 4 is a block diagram of a CDMA wireless communication system operable with the terminal shown in FIGS. 1 to 3.

FIG. 5 is a flowchart for a broadcast controlling method of a terminal according to a first embodiment of the present invention.

FIG. 6 is a diagram of a data structure including identification information for a broadcast information provider according to one embodiment of the present invention.

FIG. 7A and FIG. 7B are structural diagrams of data which includes identification information and a password for a broadcast provider according to one embodiment of the present invention.

FIG. 8 is a structural diagram of data which includes identification information and a password for a broadcast provider according to one embodiment of the present invention.

FIG. 9 is a structural diagram of data including information required to receive broadcast relevant information corresponding to the broadcast provider identified in FIG. 8.

FIG. 10 is a diagram of a screen showing broadcast information for a broadcast provider according to one embodiment of the present invention.

FIG. 11 is a diagram showing a screen for output of a broadcast signal of a channel selected from broadcast information according to one embodiment of the present invention.

FIG. 12 is a flowchart for a broadcast controlling method of a terminal according to a second embodiment of the present invention.

FIG. 13A and FIG. 13B are diagrams showing a screen displaying broadcast information for a broadcast provider according to one embodiment of the present invention.

### DETAILED DESCRIPTION OF THE PREFERRED EMBODIMENTS

In the following detailed description, reference is made to the accompanying drawing figures which form a part hereof, and which show by way of illustration specific embodiments of the invention. It is to be understood by those of ordinary skill in this technological field that other embodiments may be utilized, and structural, electrical, as well as procedural changes may be made without departing from the scope of the present invention. Wherever possible, the same reference numbers will be used throughout the drawings to refer to the same or similar parts.

Reference will now be made in detail to the preferred embodiments of the present invention, examples of which are illustrated in the accompanying drawings.

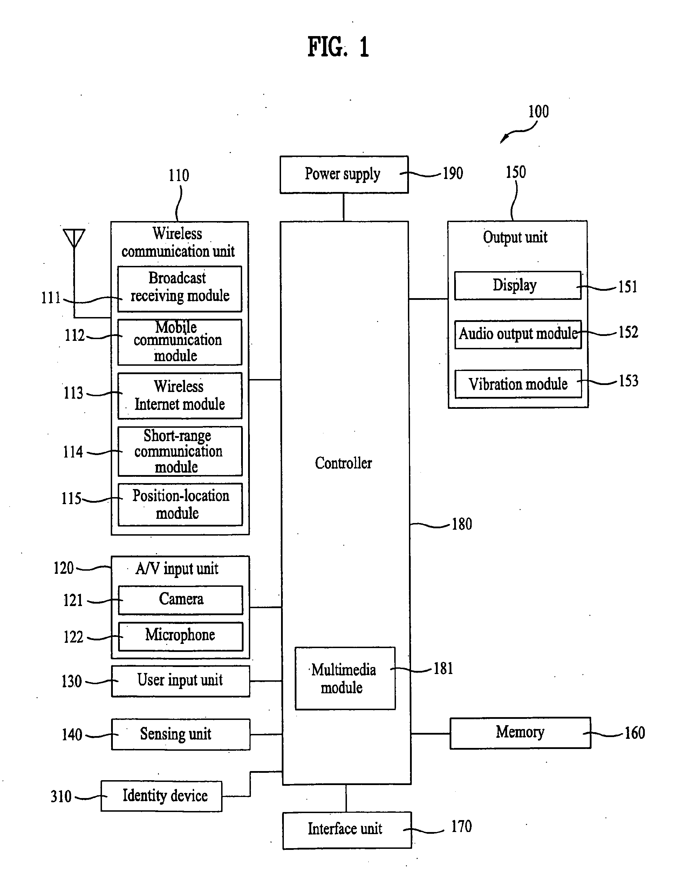

Fig. 1 is a block diagram of terminal 100 in accordance with an embodiment of the present invention. The terminal 100 may be implemented as a variety of terminal types. Examples of such terminals include mobile phones, user equipment, smart phones, computers, digital broadcast terminals, personal digital assistants, portable multimedia players (PMP), and navigators.

By way of non-limiting example only and for convenience and conciseness of the following description, the present invention is illustrated as a mobile phone. It is not intended to limit the scope of the present invention. The teachings of the present invention apply equally to other types of terminals.

Fig. 1 shows the terminal 100 having various components, but it is understood that implementing all of the illustrated components is not a requirement. Greater or fewer components may alternatively be implemented.

Fig. 1 shows the terminal 100 having a wireless communication unit 110 configured with various components. The broadcast receiving module 111 receives a broadcast signal and broadcast associated information from an external broadcast managing entity via a broadcast channel.

The broadcast channel may include a satellite channel or a terrestrial channel. The broadcast managing entity may be a system which transmits a broadcast signal or broadcast associated information.

Examples of broadcast associated information include information associated with a broadcast channel, a broadcast program, or a broadcast service provider. For example, broadcast associated information may include an electronic program guide (EPG) of digital multimedia broadcasting (DMB) or electronic service guide (ESG) of digital video broadcast-handheld (DVB-H).

The broadcast signal may be implemented as a TV broadcast signal, a radio broadcast signal, or a data broadcast signal. The broadcast signal may further include a broadcast signal combined with a TV or radio broadcast signal.

The broadcast receiving module 111 may receive broadcast signals transmitted from various types of broadcast systems. By nonlimiting example, such broadcasting systems include digital multimedia broadcasting-terrestrial (DMB-T), digital multimedia broadcasting-satellite (DMB-S), digital video broadcast-handheld (DVB-H), the data broadcasting system known as media forward link only (MediaFLO^{®}), and integrated services digital broadcast-terrestrial (ISDB-T).

The broadcast receiving module 111 may also receive multicast signals. Data received by the broadcast receiving module 111 may be stored in a suitable device, such as the memory 160.

The mobile communication module 112 transmits and receives wireless signals to and from one or more network entities, such as a base station or a Node-B. The wireless signals may represent audio, video, multimedia, control signaling, or data.

The wireless Internet module 113 provides Internet access for the terminal 100. The wireless Internet module 113 may be internally or externally coupled to the terminal 100.

The short-range communication module 114 facilitates short-range communications. Suitable technologies for implementing the short-range communications module 114 include radio frequency identification (RFID), infrared data association (IrDA), ultra-wideband (UWB), as well at the networking technologies commonly referred to as Bluetooth^{™} and ZigBee™.

The position-location module 115 identifies and obtains the location of the terminal 100. The position-location module 115 may be implemented using global positioning system (GPS) components which cooperate with associated satellites and network components.

The audio/video (A/V) input unit 120 provides audio or video signal inputs to the terminal 100. The A/V input unit 120 may include a camera 121 and a microphone 122. The camera receives and processes image frames of still pictures or video.

The microphone 122 receives an external audio signal while the terminal 100 is in a particular mode, such as a phone call mode, a recording mode, or a voice recognition mode. The audio signal is processed and converted into digital data. The terminal 100 and A/V input unit 120 may include assorted noise removing algorithms to remove noise generated in the course of receiving the external audio signal

Data generated by the A/V input unit 120 may be stored in the memory 160, utilized by the output unit 150, or transmitted via one or more modules of communication unit 110.
The terminal 100 may include two or more microphones 122 or cameras 121.

The user input unit 130 generates input data in response to user manipulation of an associated input device or devices. Examples of such devices include a keypad, a dome switch, a touchpad, a jog wheel, and a jog switch.

The sensing unit 140 provides status measurements for various aspects of the terminal 100. For example, the sensing unit may detect an open and close state of the terminal 100, relative positioning of components of the terminal, a change of position of the terminal, a change of position of a component of the terminal, a presence or absence of user contact with the terminal, orientation of the terminal, or acceleration or deceleration of the terminal. The sensing unit 140 may also sense the presence or absence of power provided by the power supply 190 and the presence or absence of a connection between the interface unit 170 and an external device.

The interface unit 170 may be implemented to connect the terminal with an external device. External devices include wired and wireless headphones, external chargers, power supplies, storage devices configured to store data, or microphones. The interface unit 170 may be configured using a wired and wireless data port, a memory card socket, audio input and output ports (I/O), or video I/O ports.

In the present embodiment, an identity device 310 is a chip which stores information to identify or authenticate a user of the terminal 100. The identity device 310 may be a user identify module (UIM), a subscriber identify module (SIM), or a universal subscriber identity module (USIM).

The identity device 310 may include a module to authenticate a broadcast purchase or broadcast viewing using the terminal 100. The identity module may be manufactured as a smart card and may connect to the terminal 100 via a port.

The output unit 150 outputs information associated with the terminal 100. The display 151 is typically implemented to display information associated with the terminal 100. For example, the display 151 may provide a graphical user interface which includes information associated with a phone call if the terminal is operating in a phone call mode. The display 151 may display images which are associated with various modes, such as a video call mode or a photographing mode.

The display 151 may be configured as a touch screen working in cooperation with the input unit 130, in one embodiment of the present invention. This configuration allows the display 151 to function both as an output device and an input device.

The display 151 may be implemented using known display technologies such as a liquid crystal display (LCD), a thin film transistor-liquid crystal display (TFT-LCD), an organic light-emitting diode display (OLED), a flexible display, or a three-dimensional display. The terminal 100 may include one or more displays 151. An example of a two-display embodiment is one in which one display 151 is configured as an internal display which is viewable when the terminal 100 is in an opened position and a second display configured as an external display which is viewable in both the open and closed positions.

Fig. 1 further shows the output unit 150 having an audio output module 152. The audio output module 152 may be implemented using one or more speakers, buzzers, or other audio producing devices.

The audio output module 152 functions in various modes including a call-receiving mode, a call-placing mode, a recording mode, a voice recognition mode, or a broadcast reception mode. The audio output module 152 outputs audio relating to a particular function, such as a call notification, a message notification, or a error notification.

The output unit 150 is further shown having a vibration module 153, which may be used to identify the occurrence of an event associated with the terminal 100. An example an output of vibration module 153 includes a vibration as a notification to a user.

The vibration module 153 may vibrate when the terminal 100 receives a call or message. Vibration may also be provided by the vibration module 153 in response to receiving user input at the terminal 100, thereby providing a tactile feedback mechanism. It is understood that the various outputs provided by the components of output unit 150 may be performed separately or performed using any combination of the components.

The memory 160 may store various types of data to support the processing, control, or storage requirements of the terminal 100. Examples of such data include program instructions for applications operating on the terminal, contact data, phonebook data, messages, pictures, or video.

The memory 160 shown in Fig. 1 may be implemented using any type of volatile and non-volatile memory or storage devices. Such devices may include random access memory (RAM), static random access memory (SRAM), electrically erasable programmable read-only memory (EEPROM), erasable programmable read-only memory (EPROM), programmable read-only memory (PROM), read-only memory (ROM), magnetic memory, flash memory, magnetic or optical disk, card-type memory, or other similar memory or data storage device.

The controller 180 controls the overall operations of the terminal 100. For example, the controller 180 performs the control and processing associated with voice calls, data communications, video calls, camera operations, and recording operations.

The controller 180 may include a multimedia module 181 which provides multimedia playback. The multimedia module 181 may be configured as part of the controller 180 or may be implemented as a separate component.

The power supply 190 provides power to the various components of the terminal 100. The power provided may be internal power or external power.

In the following description, operation between the respective components of the terminal 100 according to the present invention are explained in detail with reference to FIG. 1.

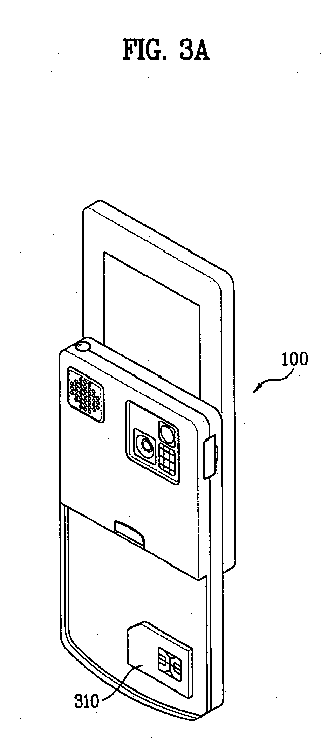

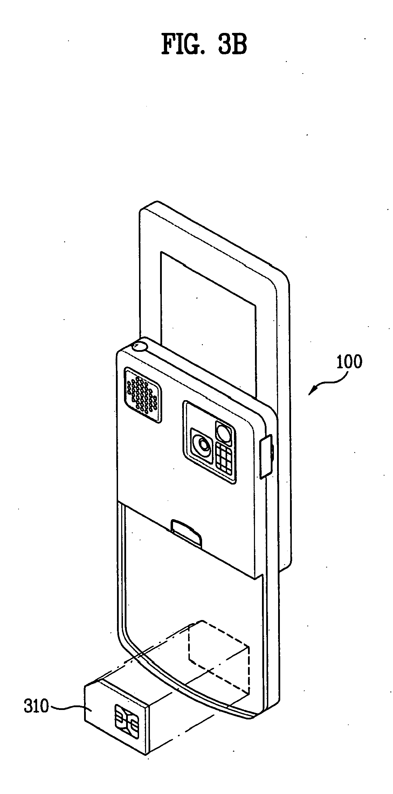

The controller 180 identifies a broadcast provider using an identity device 310 (FIGS. 3A and 3B) attached via the interface unit 170 and may output a control signal to the respective components according to the identification result. The controller 180 may identify a broadcast provider with a password that matches a password set in the identity device 310. Data including the identification information on the broadcast provider and the corresponding password may be received via the wireless communication unit 110 or may be used for a password comparing operation executed by the controller 180.

The wireless communication unit 110 may receive broadcast relevant information on the identified broadcast provider in response to a control signal of the controller 180. The display 151 may display the received broadcast relevant information in accordance with a control signal of the controller 180.

Various embodiments described herein may be implemented in a computer-readable medium using computer software. The various embodiments may also be implemented in hardware.

A hardware implementation may be implemented using one or more application specific integrated circuits (ASICs), digital signal processors (DSPs), digital signal processing devices (DSPDs), programmable logic devices (PLDs), field programmable gate arrays (FPGAs), processors, controllers, micro-controllers, microprocessors, or other electronic units designed to perform the functions described herein. Some embodiments are implemented by controller 180.

A software implementation of the embodiments described herein may be implemented with separate software modules, such as procedures and functions, each of which perform one or more of the functions and operations described herein. The software code may be implemented with a software application written in any suitable programming language and may be stored in the memory 160 for execution by the controller 180 or a processor.

The terminal 100 may be implemented in a variety of different configurations. Examples of such configurations include folder-type, slide-type, bar-type, rotational-type, and swing-type.

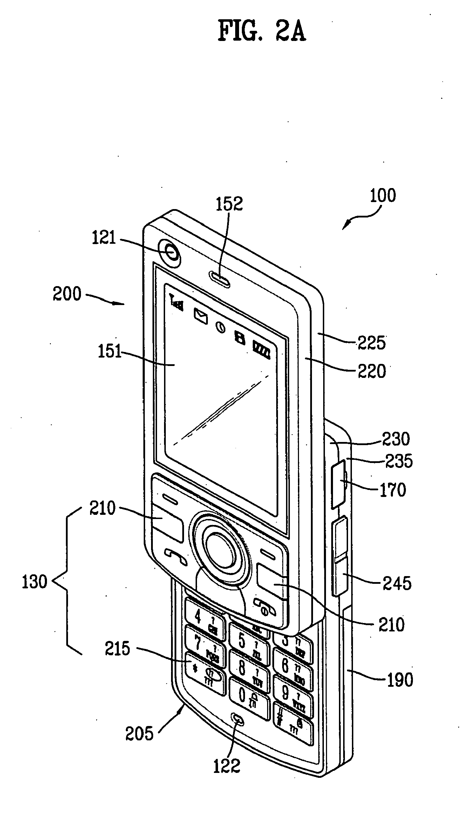

For clarity, further disclosure will primarily relate to a slide-type terminal 100. However such teachings apply equally to other types of terminals 100. Fig. 2A is a perspective view of a front side of a terminal 100 according to an embodiment of the present invention. As shown in Fig. 2A, the terminal 100 is shown having a first body 200 configured to slideably cooperate with a second body 205.

The first body 200 slides relative to second body 205 between open and closed positions. The first body 200 is positioned over the second body 250 in the closed position such that the keypad 215 is substantially or completely obscured by the first body 200. The user may access the keypad 215, the display 151, and function keys 210 in the open position. The function keys 210 may be configured for a user to enter commands such as start, stop, or scroll.

The user input unit 130 is implemented using the function keys 210 and keypad 215. The function keys 210 are associated with the first body 200 and the keypad 215 is associated with the second body 205. The keypad 215 includes various keys such as numbers, characters, and symbols, to enable a user to place a call, prepare a text or multimedia message, and operate the terminal.

The terminal 100 is operable in either a standby mode or an active call mode. Typically, the terminal 100 functions in the standby mode when in the closed position and in the active mode when in the open position. The mode configuration may be changed as required or desired by the user.

The first body 200 is shown formed from a first case 220 and a second case 225 and the second body 205 is shown formed from a first case 230 and a second case 235. The respective first 220, 230 and second 225, 235 cases may be formed from a suitably ridge material such, as injection molded plastic, or formed using metallic material, such as stainless steel (STS) and titanium (Ti).

One or more intermediate cases may be provided between the first case 220 and second case 225 of the first body 200 or between the first case 230 and second case 235 of the second body 205. The first body 200 and the second body 205 may be sized to house electronic components necessary to support operation of the terminal 100.

The first body 200 is shown having a camera 121 and audio output module 152. The camera 121 may be selectively positioned such that it may rotate or swivel relative to the first body 200.

The function keys 210 are positioned adjacent to a lower side of the display 151. The display 151 is shown implemented as an LCD. The display 151 may also be configured as a touchscreen having an underlying touchpad which generates signals responsive to user contact with the touchscreen.

The second body 205 is shown having a microphone 122 positioned adjacent to the keypad 215 and side keys 245 positioned along the side. The side keys 245 may be configured as hot keys, such that the side keys are associated with a particular function of the terminal 100.

An interface unit 170 is shown positioned adjacent to the side keys 245. A power supply 190 in a form of a battery is located on a lower portion of the second body 205.

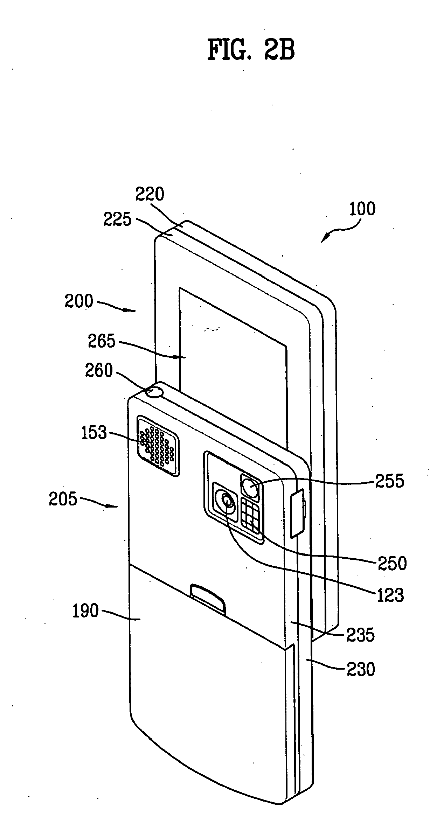

Fig. 2B is a rear view of the terminal 100 shown in FIG. 2A. As shown in Fig. 2B, the second body 205 includes a camera 123, a flash 250, and a mirror 255.

The flash 250 operates in conjunction with the camera 123. The mirror 255 is useful for assisting a user to position the camera 123 in a self-portrait mode.

The camera 123 of the second body 205 faces a direction opposite to a direction faced by the camera 121 of the first body 200. The camera 121 of the first body 200 and camera 123 of the second body 205 may have the same or different capabilities.

In one embodiment, the camera 121 of the first body 200 operates with a relatively lower resolution than the camera 123 of the second body 205. Such an arrangement works well during a video conference in which reverse link bandwidth capabilities may be limited. The relatively higher resolution of the camera 123 of the second body 205 is useful for obtaining higher quality pictures.

The second body 205 also includes an audio output module 153 configured as a speaker which is located on an upper side of the second body. The audio output module 152 of the first body 200 and the audio output module 153 of second body 205 may cooperate to provide stereo output. Moreover, either or both of the audio output modules 152 and 153 may be configured to operate as a speakerphone.

A broadcast signal receiving antenna 260 is shown located at an upper end of the second body 205. The antenna 260 functions in cooperation with the broadcast receiving module 111. The antenna 260 may be fixed or configured to retract into the second body 205.

The rear side of the first body 200 includes a slide module 265. The slide module 265 which slideably couples with a corresponding slide module (not shown) located on the front side of the second body 205.

It is understood that the illustrated arrangement of the various components of the first body 200 and the second body 205 may be modified as desired. Some or all of the components of one body may alternatively be implemented on the other body. In addition, the location and relative positioning of the components are not critical to many embodiments and, therefore, the components may be positioned at locations which differ from those shown by the representative figures.

FIG. 3A and FIG. 3B are perspective diagrams showing a replaceable identity device 310 of a terminal 100 according to one embodiment of the present invention. As shown in FIGS. 3A and 3B, the detachable identity device 310 may be a SIM card.

Referring to FIG. 3A and FIG. 3B, the identity device 310 is attached to the terminal 100. The identity device 310 may be detached and replaced.

The identity device 310 may be combined with the interface unit 170. Additionally, the identity device 310 may be connected to the terminal 100 by a separate connector. A connector (not shown) for connecting the identity device 310 to the terminal 100 may be provided at a backside, a lateral side, or a front side of the terminal 100.

The terminal 100 may operate in a communication system capable of transmitting data via frames or packets. The communication system may include wired communication, wireless communication, or satellite-based communication system.

The communication system may utilize various systems such as frequency division multiple access (FDMA), time division multiple access (TDMA), code division multiple access (CDMA), universal mobile telecommunications system (UMTS), long term evolution (LTE) of the UMTS, or the global system for mobile communications (GSM). By way of non-limiting example, further description will relate to a CDMA communication system, but such teachings apply equally to other system types.

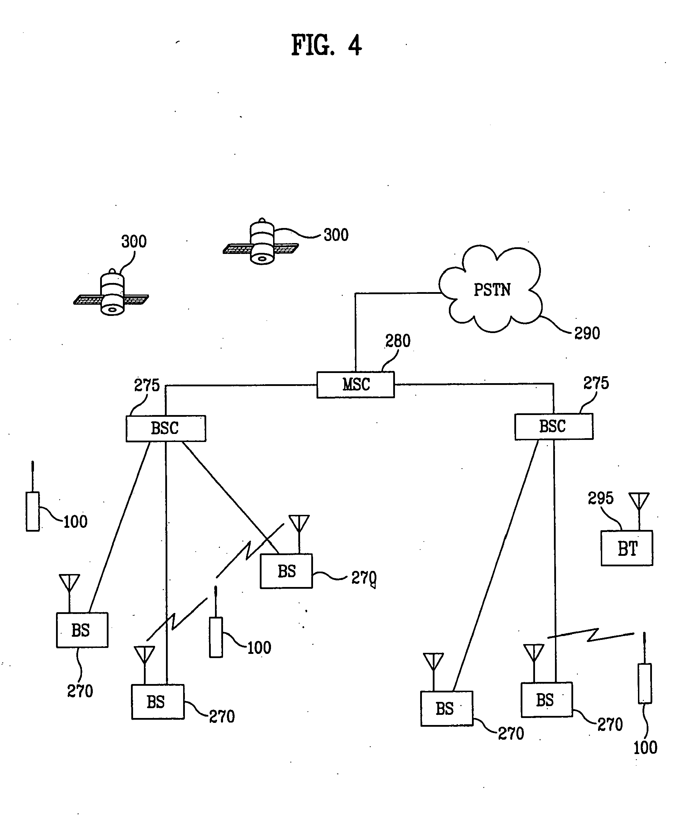

As shown in Fig. 4, a CDMA wireless communication system is shown having a plurality of terminals 100, a plurality of base stations (BS) 270, base station controllers (BSC) 275, and a mobile switching center (MSC) 280. The MSC 280 is configured to interface with a conventional public switch telephone network (PSTN) 290 and is also configured to interface with the BSCs 275.

The BSCs 275 are coupled to the BSs 270 via backhaul lines. The backhaul lines may be configured in accordance with any of several known interfaces including E1/T1, ATM, IP, PPP, Frame Relay, HDSL, ADSL, or xDSL. It is to be understood that the system may include more than two BSCs 275.

Each BS 270 may include one or more sectors, each sector having an omnidirectional antenna or an antenna pointed in a particular direction radially away from the BS 270. Each sector may include two antennas for diversity reception. Each BS 270 may be configured to support a plurality of frequency assignments, with each frequency assignment having a particular spectrum.

The intersection of a sector and frequency assignment may be referred to as a CDMA channel. The BSs 270 may also be referred to as base station transceiver subsystems (BTSs). In an alternate embodiment, the term "base station" may be used to refer collectively to a BSC 275 and one or more BSs 270.

The BSs 270 may also be denoted "cell sites." Alternatively, individual sectors of a given BS 270 may be referred to as cell sites.

A broadcasting transmitter (BT) 295 is shown broadcasting to terminals 100 operating within the system. The broadcast receiving module 111 of the terminal 100 is configured to receive broadcast signals transmitted by the BT 295. Similar arrangements may be implemented for other types of broadcast and multicast signaling.

Fig. 4 also shows several global positioning system (GPS) satellites 300. The GPS satellites 300 facilitate locating the position of some or all of the terminals 100. The position-location module 115 of the terminal 100 is typically configured to cooperate with the satellites 300 to obtain position information

Other types of position detection technology may be used in addition to or instead of GPS location technology. Some or all of the GPS satellites 300 may alternatively or additionally be configured to provide satellite DMB transmissions.

The BSs 270 receive sets of reverse-link signals from various terminals 100 during operation of the wireless communication system. The terminals 100 are performing calls, messaging, or other communications.

Each reverse-link signal received by a BS 270 is processed within that BS. The resulting data is forwarded to an associated BSC 275.

The BSC 275 provides call resource allocation and mobility management functionality including soft handoffs between base stations 270. The BSCs 275 also route the received data to the MSC 280, which provides additional routing services for interfacing with the PSTN 290. Similarly, the PSTN interfaces with the MSC 280 and the MSC interfaces with the BSC 275, which in turn control the BSs 270 to transmit sets of forward-link signals to the terminals 100.

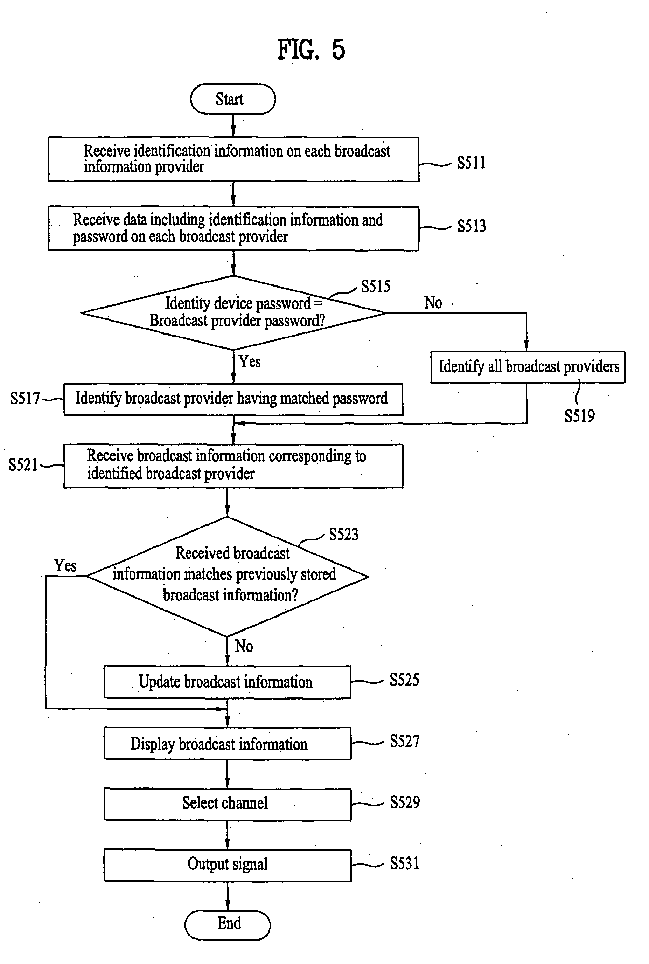

In the following description, steps of a broadcast controlling method of a terminal 100 according to the present invention are explained one-by-one with reference to FIG. 5 as follows. FIG. 5 is a flowchart for a broadcast information reception method of a terminal according to a first embodiment of the present invention.

It is assumed that a terminal 100 includes a removable identity device 310. The identity device 310 may be used for authenticating the use of the terminal 100 or authenticating the rights to view a broadcast using the terminal. The identity device 310 is explained in detail in the foregoing description.

As shown in FIG. 5, a terminal 100 receives first data via a wireless communication unit 110. The first data may include identification information for one or more broadcast information providers supported by a network, [S511].

The broadcast information provider refers to an external server that provides information related to a broadcast program. For example, broadcast information may include channel identification information, broadcast program identification information, broadcast program broadcast time information, information on an interactive service interconnected to a broadcast program, or broadcast program content information such as title, synopsis, preview broadcast, or character information. The broadcast information may be provided as an electronic program(me) guide (EPG), an interactive program guide (IPG), or an electronic service guide (ESG).

The broadcast information provider connects to at least one broadcast provider and provides broadcast information on a channel. The terminal 100 receives the channel via the broadcast provider.

The terminal 100 may receive data using one of a plurality of components included in the wireless communication unit 110 in accordance with a data receiving path [S511]. For example, the broadcast receiving module 111 receives the data from a data channel of a broadcast network or a broadcast channel.

The mobile communication module 112 may receive the data via a mobile communication network or a data network. The wireless Internet module 113 may receive the first data via the Internet. The short-rage communication module 114 may receive the first data via a short-range communication network.

The identification information may be automatically received [S511] when entering a broadcast mode, a broadcast viewing mode, a channel scan mode, a broadcast information receiving mode, or a broadcast information displaying mode. The identification information may be received [S511] periodically or randomly.

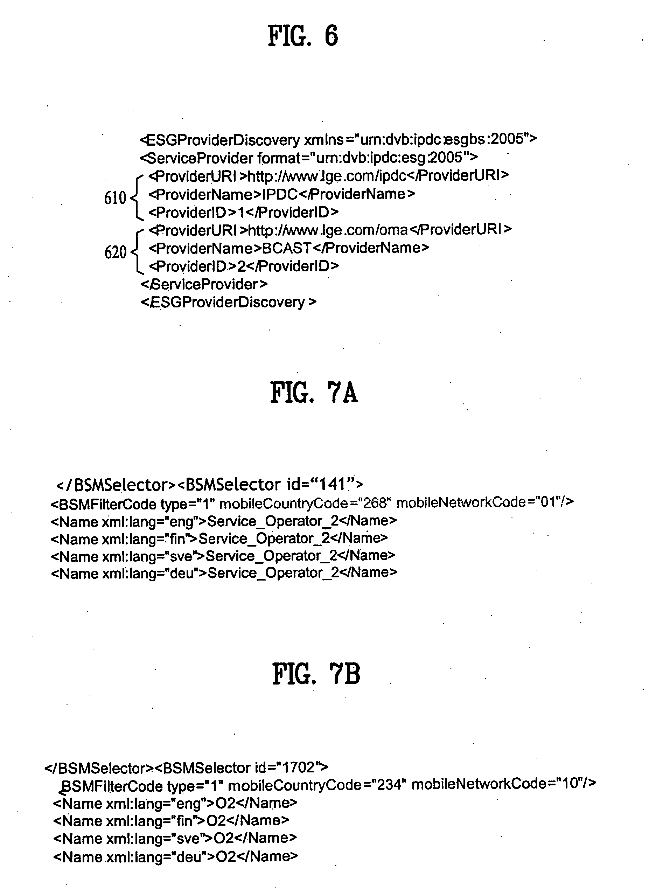

A structure of the first data is explained with reference to FIG. 6. For clarity and convenience of description, FIG. 6 shows bootstrap type first data.

The first data includes identification information for at least one broadcast information provider. The first data shown in FIG. 6 includes identification information 610, 620.

The identification information 610, 620 may include at least one Internet address information 'ProviderURI' for the corresponding broadcast information provider, a name 'ProviderName' for the corresponding broadcast information provider, or an ID 'ProviderID' of the corresponding broadcast information provider. Using the data shown in FIG. 6, the terminal 100 may identify the broadcast information provider and may determine whether a plurality of broadcast information providers are available.

As shown in FIG. 5, the terminal 100 receives second data including identification information and a password for at least one broadcast provider via the wireless communication unit 110 [S513]. The terminal 100 may receive the second data using one of the components included in the wireless communication unit 110.

The broadcast provider provides a broadcast signal to the terminal 100 via at least one channel. For example, the broadcast provider provides broadcast signals for channels provided by the broadcast provider to a terminal having a broadcast use authority for the corresponding broadcast provider. The second data includes information required to receive broadcast information.

If the identification information of the broadcast relevant information provider is included in the first data, the second data may include identification information and a password for a single broadcast provider or a plurality of broadcast providers. If identification information for a single broadcast information provider is included in the first data, the second data may include identification information and password for a single broadcast provider or a plurality of broadcast providers connected to the broadcast information provider.

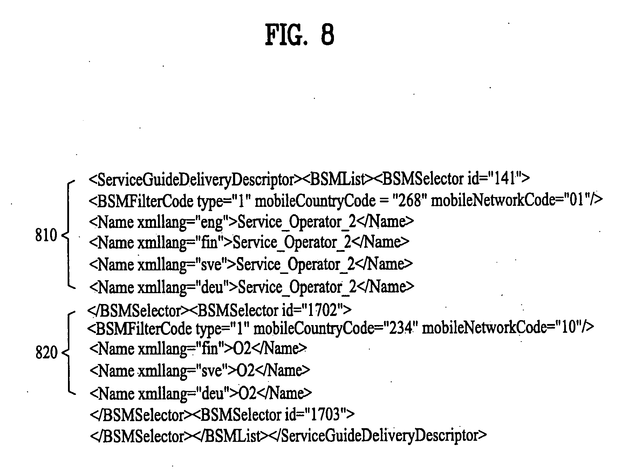

A second data structure is explained with reference to FIG. 7 and FIG. 8. A portion of SGDD (service guide delivery descriptor) type second data is shown in FIG. 7 and FIG. 8. FIG. 7 illustrates an example of a single broadcast provider connected to a broadcast information provider. FIG. 8 illustrates an example of a plurality of broadcast providers connected with a broadcast information provider.

Second data shown in FIG. 7A may include identification information and a password of a first broadcast provider connected to a first broadcast information provider. The identification information is a broadcast provider name 'Operator_2' and the password includes a MCC (mobile country code) 'mobileCountryCode: MCC 268' and a MNC (mobile network code) 'mobileNetworkCode: MNC 01'.

Second data shown in FIG. 7B may include identification information and a password of a second broadcast provider connected to a second broadcast information provider. The identification information is a broadcast provider name '02' and the password includes a MCC 'mobileCountryCode: MCC 234' and a MNC 'mobileNetworkCode: MNC 10'.

As shown in FIG. 8, second data may include identification information and password for a first broadcast provider connected to a broadcast information provider and identification information and password for a second broadcast provider connected to the same broadcast information provider. In the following description, the identification information and the password for a first broadcast provider are referred to as a first identification information and a first password. The identification information and the password for a second broadcast provider are referred to as a second identification information and a second password.

The first identification information is a broadcast provider name 'Operator_2' and the first password includes a mobile country code 'mobileCountryCode: MCC 268' and a mobile network code 'mobileNetworkCode: MNC 01'. The second identification information is a broadcast provider name '02' and the second password includes a mobile country code 'mobileCountryCode: MCC 234' and a mobile network code 'mobileNetworkCode: MNC 10'.

If a plurality of broadcast providers are connected to a single broadcast information provider, the terminal 100 should recognize an identifier, such as BSMSelector id, that matches each password. This is to distinguish information required to receive broadcast information for a corresponding broadcast provider. Details of this process will be explained later.

Second data including identification information and a password for a single broadcast provider or a plurality of broadcast providers are included as shown in FIGS. 7 and 8. Each broadcast information provider may provide the terminal 100 with second data related to the broadcast information provider.

Various values may be used as a password for the broadcast provider, the MCC, and the MNC. For example, at least one of a service provider name 'ServiceProviderName', a service provider code 'ServiceProviderCode', or a corporate code 'CorporateCode' may be used as the password.

If the values of the MCC and the MNC match the values set in the identity device 310, the terminal 100 may identify a broadcast provider using the service provider name 'ServiceProviderName'. Alternatively, regardless of whether the values of the MCC and the MNC match the values set in the identity device 310, the terminal 100 may identify a broadcast provider using at least one of a service provider name, a service provider code, or a corporate code.

Referring to FIG. 5 again, the terminal 100 determines whether a password set in the identity device 310 matches a password of a broadcast provider obtained from the second data [S515]. For example, a service provider name, a service provider code or a corporate code may be set as a password in the identity device 310, the MCC, or the MNC.

If a plurality of broadcast providers are obtained from the second data, the terminal 100 is able determine if the terminal 100 is authorized to communicate with the broadcast provider by matching the password read from the identity device 310 to a password set for each of the plurality of the broadcast providers.

If the passwords do not match, the terminal 100 identifies all broadcast providers obtained from the second data [S519]. If the passwords match, the terminal 100 identifies the broadcast provider having the matched password [S517].

When identifying the broadcast providers with the matched password [S517] and identifying all broadcast providers [S519], if a single broadcast provider is connected with a broadcast information provider, the broadcast provider may recognize the information required to receive broadcast information for a corresponding broadcast provider from the second data.

When identifying the broadcast providers with the matched password [S517] and identifying all broadcast providers [S519], if a plurality of broadcast providers are connected with a broadcast information provider, the information required to receive broadcast information should be distinguished for each broadcast provider amongst the plurality of broadcast providers.

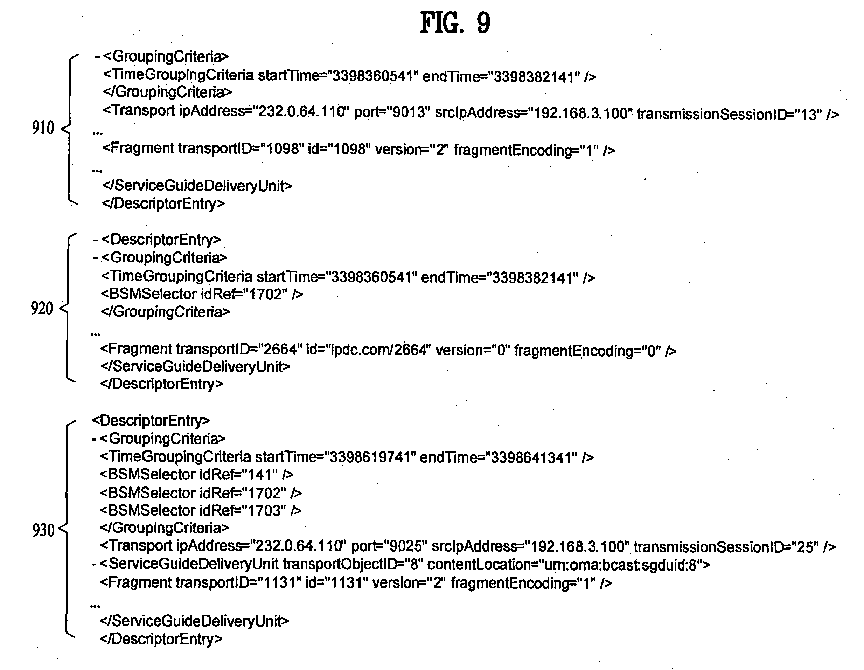

A data structure for information that is required to receive per-broadcast provider broadcast information included in second data is explained with reference to FIG. 9. FIG. 9 illustrates a portion of SGDD (service guide delivery descriptor) type second data.

The terminal 100 may recognize an identifier 'BSMSelector id' of a broadcast provider having a password that matches the MCC password or the MNC password set in the identity device 310 from the second data shown in FIG. 8. In the following description, the identifier recognized in FIG. 8 is assumed as BSMSelector id '141'.

As shown in FIG. 9, the second data may include information 910 common to all BSMSelector id, an information 920 corresponding to BSMSelector id '1702', and an information 930 corresponding to BSMSelector id '141', '1702' and '1703', as information required for the reception of broadcast information. For example, the information required for the reception of broadcast information may include an identification information (id) of the broadcast information or a version information (version) of the broadcast information.

The information corresponding to the BSMSelector id '141' recognized in FIG. 8 includes the information described in the information 910, 930.

Referring to FIG. 5 again, the terminal 100 receives the broadcast information related to the broadcast provider via the wireless communication unit 110 [S521]. The terminal 100 may receive the broadcast information related to the identified broadcast provider using the information, which is required for the reception of the broadcast information obtained from the second data.

The terminal 100 may provide broadcast information for at least one channel provided by the broadcast provider. The terminal 100 may provide broadcast information for a shared channel among at least one or more channels provided by the broadcast provider. The shared channel refers to a channel provided by a broadcast provider that allows broadcast viewing authority to all terminals including a terminal provided with a broadcast viewing authority by the corresponding broadcast provider.

The broadcast information may be stored in the memory 160. The terminal 100 determines whether the broadcast information previously stored in the memory 160 matches the received broadcast information [S523].

The terminal 100 may determine the status of a connection by using the identification information and the version information of the broadcast information included in the second data. For example, the terminal 100 may determine the status of a connection using version information of the broadcast information if the received broadcast information contains information for the same area within the same country with reference to a reception time of broadcast information stored in the memory 160.

If the broadcast relevant information is currently located in a different area within a same country with reference to a reception time of broadcast relevant information stored in the memory 160, the terminal 100 may determine the status of a connection using identification information of the broadcast relevant information. The terminal 100 may recognize that a country or region has been changed with reference to the reception time of the broadcast relevant information stored in the memory 160 if the identification information of the received broadcast relevant information is different.

The terminal 100 may update the broadcast information stored in the memory 160 with broadcast information corresponding to a new country or identity device if the country or the identity device 310 is changed.

If the broadcast information stored in the memory 160 does not match the received broadcast information, the terminal 100 updates the broadcast information stored in the memory 160 with the received broadcast information (S525).

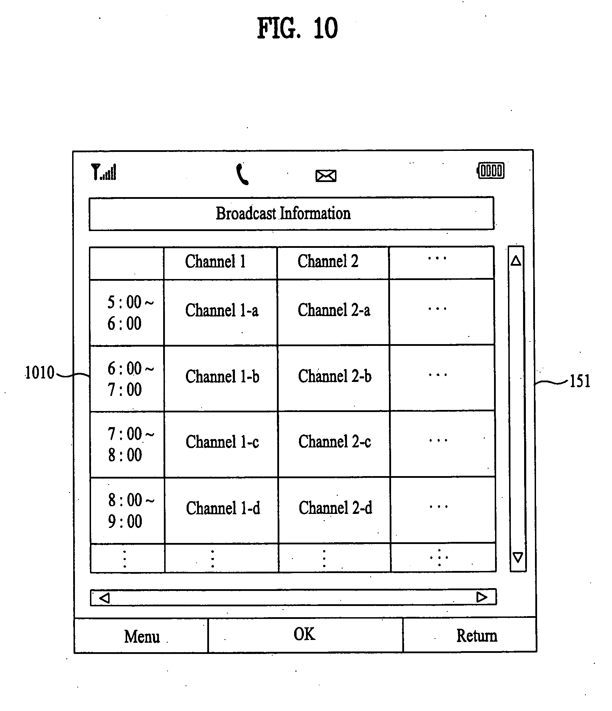

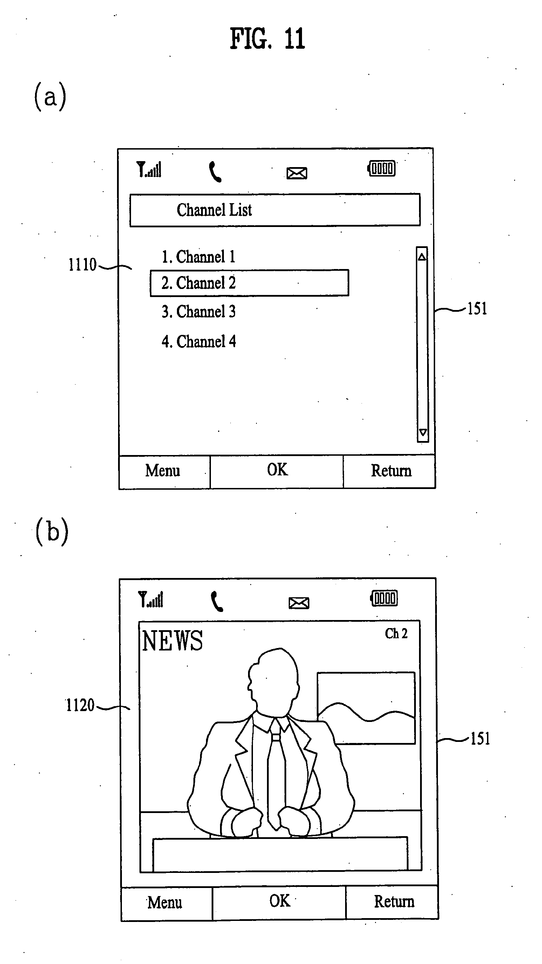

The terminal 100 displays the broadcast information via the display 151. For example, as shown in FIG. 10, the terminal 100 may display the broadcast information as broadcast organization information. Alternatively, as shown in FIG. 11(a), the terminal 100 may display the broadcast information as a channel list constructed with available channels.

The user selects a channel displayed in the broadcast organization information via the user input unit 130 [S529]. The terminal 100 receives a broadcast signal via the broadcast receiving module 111 for the selected channel and then outputs the received broadcast signal via the output unit 150. For example, as shown in FIG. 11(b), the terminal 100 may output a broadcast signal when a specific channel is selected from a channel list 1110.

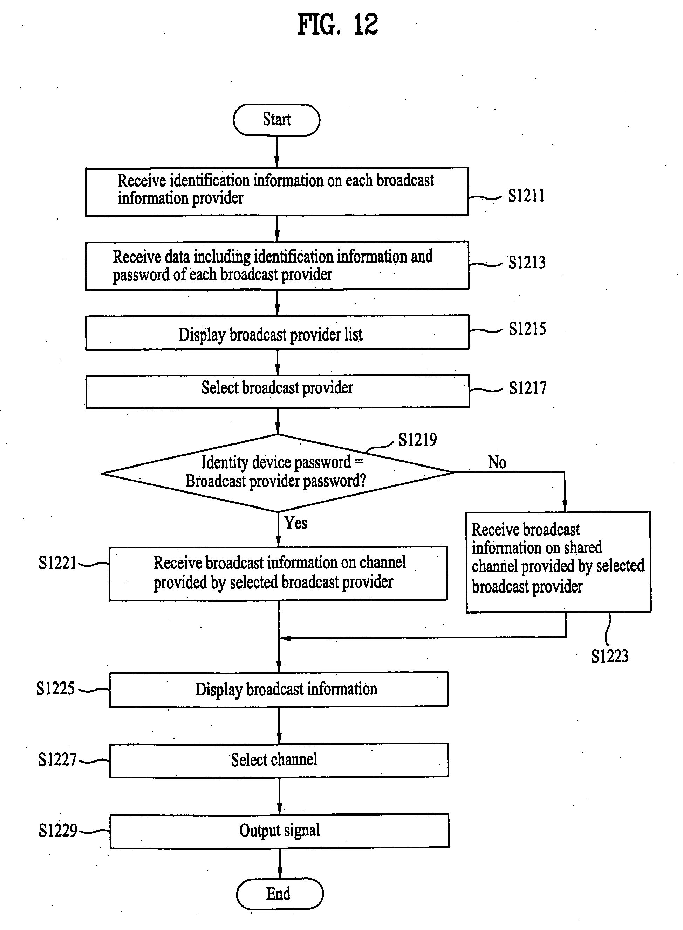

A broadcast controlling method of a terminal according to the present invention is explained with reference to FIG. 12. FIG. 12 is a flowchart for a broadcast controlling method of a terminal according to a second embodiment of the present invention. It is assumed that the terminal 100 includes a removable identity device 310.

As shown in FIG. 12, the terminal 100 receives first data which includes identification information for one or more broadcast information providers supported by a network, via the mobile communication unit 110 (S1211).

The terminal 100 receives second data including identification information and password for at least one broadcast provider via the wireless communication unit 110 (S1213) .

The terminal 100 displays a list including broadcast providers via the display 151 (S1215).

The terminal 100 may identify broadcast providers connected to broadcast information providers from the second data. The terminal 100 may configure a channel list using the broadcast provider names since broadcast provider names are included in the second data.

The terminal 100 displays a broadcast provider selected from the list of broadcast providers. The broadcast provider is selected via the user input unit 130 (S1217).

The terminal 100 determines whether a password set in the identity device 310 matches a password set in the selected broadcast provider (S1219).

The terminal 100 receives broadcast information for at least one channel provided by the selected broadcast provider if the passwords match (S1221). The terminal 100 receives broadcast information for a shared channel among one or more channels provided by the selected broadcast provider if the passwords do not match (S1223).

The terminal 100 may receive broadcast information corresponding to the identified broadcast provider using the information obtained from the second data which is required for the reception of broadcast information.

The terminal 100 may receive broadcast information for a shared channel among at least one or more channels provided by an unselected broadcast provider.

The terminal 100 displays the broadcast information for the selected broadcast receiver via the display 151 (S1229). For example, the terminal 100 may display the broadcast information for at least one channel provided by the selected broadcast provider as broadcast organization information.

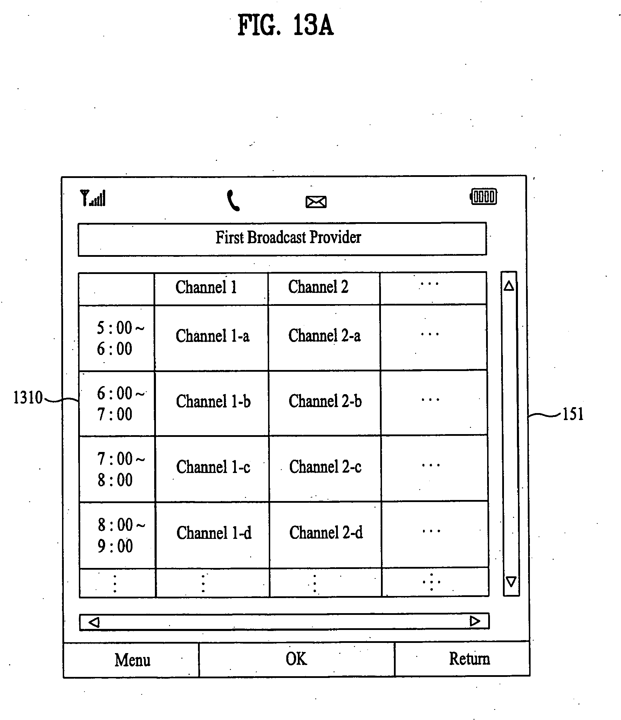

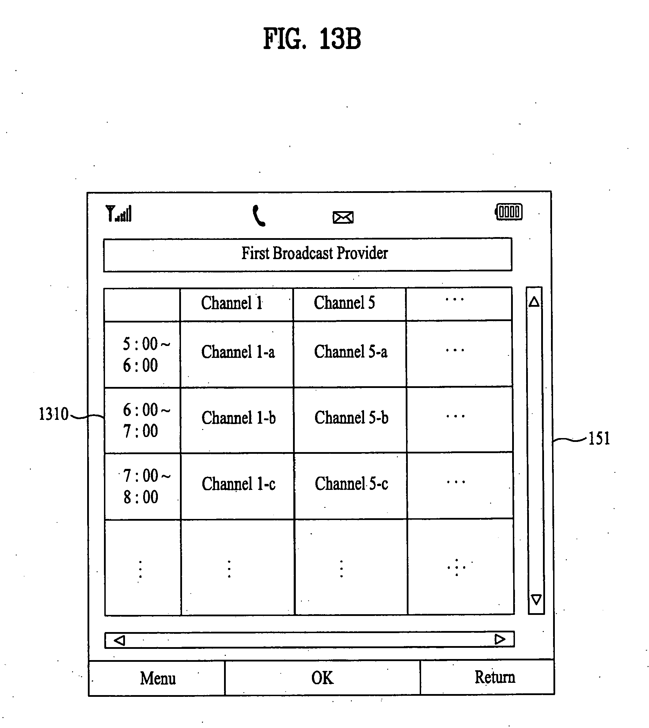

The terminal 100 may display the broadcast information for the shared channel among one or more channels provided by the selected broadcast provider as broadcast organization information, as shown in FIG. 13B.

The user of the terminal 100 selects a channel from the broadcast information displayed via the user input unit 130 (S1227). The terminal 100 receives a broadcast signal via the selected channel and outputs the received broadcast signal via the output unit 150 (S1229).

The broadcast controlling method according to the present invention may be implemented with computer-readable codes on a medium having a program recorded thereon. The computer-readable recording media include all kinds of storage devices for storing data that can be read by a computer system. The computer-readable recording media include ROM, RAM, CD-ROM, magnetic tapes, floppy discs, and optical data storage devices as well as a device implemented with carrier waves, such as transmission via the Internet. The computer may include the controller 180 of the terminal.

The present invention provides the following effects or advantages. First, the present invention identifies a specific broadcast provider using an identity device loaded in a terminal and then receives broadcast information for the identified broadcast provider. A user-subscribed mobile broadcast service includes a plurality of broadcast information. If a subscribed identity device is loaded in a terminal, a broadcast signal may be viewed without individually selecting a broadcast provider. Second, if an identify device corresponding to a specific broadcast provider is loaded, a broadcast signal may be viewed immediately. Therefore, the present invention reduces preparation time for a broadcast viewing.

It will be apparent to those skilled in the art that various modifications and variations can be made in the present invention without departing from the spirit or scope of the inventions. Thus, it is intended that the present invention covers the modifications and variations of this invention provided they come within the scope of the appended claims and their equivalents.

## Claims

1. A terminal comprising:
a replaceable identity device attached to the terminal;
a wireless communication unit for receiving broadcast information;
an output unit for displaying the broadcast information received by the wireless communication unit; and
a controller for identifying a broadcast provider using the identity device and controlling the wireless communication unit to receive the broadcast information corresponding to the identified broadcast provider.

2. The terminal of claim 1, wherein the wireless communication unit receives data including identification information and a password for at least one broadcast provider and wherein the controller identifies the broadcast provider by matching the broadcast provider password with the identity device password using the received data.

3. The terminal of claim 2, wherein the controller identifies each of the at least one broadcast provider using the received data if the broadcast provider password does not match the identity device password.

4. The terminal of claim 3, wherein the wireless communication unit receives the broadcast information for a shared channel provided by the at least one broadcast provider under control of the controller.

5. The terminal of claim 2, wherein the wireless communication unit receives the broadcast information for a channel provided by the broadcast provider and a shared channel provided by a different broadcast provider under control of the controller if the identity device password matches the broadcast provider password.

6. The terminal of any of claims 2-5, wherein the wireless communication unit receives data including identification information for each of at least one broadcast information provider and the at least one broadcast information provider is interconnected to the at least one broadcast provider.

7. The terminal of any of claims 1-6, wherein the controller recognizes an identifier of the broadcast provider and uses the recognized identifier to determine information required to receive the broadcast information and the wireless communication unit receives the broadcast information using the required information.

8. The terminal of any of claims 1-7, further comprising:
a memory for storing the broadcast information,
wherein the controller compares the received broadcast information to the stored broadcast information and updates the stored broadcast information with the received broadcast information if the received broadcast information is different from the stored broadcast information.

9. The terminal of any of claims 1-8, further comprising:
a user input unit for receiving a channel selection using the displayed broadcast information,
wherein the output unit outputs a broadcast signal provided by the selected channel under control of the controller.

10. The terminal of any of claims 1-8, further comprising; a user input unit for receiving a selection of one or more broadcast providers from a broadcast provider list displayed using the output unit,
wherein the controller determines whether an identity password set in the identity device matches a broadcast password set for the selected broadcast provider.

11. The terminal of claim 10, wherein the controller controls the wireless communication unit to receive the broadcast information on a channel provided by the selected broadcast provider and a shared channel provided by an unselected broadcast provider if the identity password matches the broadcast password, and the controller controls the wireless communication unit to receive the broadcast information on a shared channel provided by the one or more broadcast providers if the identity password does not match the broadcast password.

12. A method of controlling a broadcast in a terminal, the method comprising:
identifying a broadcast provider using a removable identity device attached to the terminal;
receiving broadcast information related to the identified broadcast provider; and
displaying the received broadcast information.

13. The method of claim 12, further comprising:
receiving data including identification information and a broadcast password for at least one broadcast provider,
wherein identifying the broadcast provider comprises identifying the broadcast provider having the broadcast password that matches an identity password set in the identity device.

14. The method of claim 13, wherein identifying the broadcast provider comprises identifying the at least one broadcast provider using the received data if the broadcast password for the at least one broadcast provider does not match the identity password set in the identity device,
wherein receiving the broadcast information comprises receiving the broadcast information on a shared channel provided by the at least one broadcast provider.

15. The method of any of claims 12-14, further comprising:
displaying a list including at least one broadcast provider;
selecting a broadcast provider from the displayed list;
determining whether an identity device password set in an identity device attached to the terminal matches a broadcast provider password set for the selected broadcast provider;
receiving broadcast information for a channel provided by the selected broadcast provider if the identity device password matches the broadcast provider password; and
displaying the received broadcast information.
